# EUROPEAN PATENT APPLICATION

(11) **EP 2 306 274 A1**
(43) Date of publication of application: **06.04.2011**
(21) Application number: 08702852.8
(22) Date of filing: 31.01.2008
(51) Int. Cl.: G06F 3/023, G06F 3/02, H03M 11/14

(54) **ANALOG INPUT DEVICE, ANALOG INPUT METHOD, ANALOG INPUT PROGRAM AND COMPUTER READABLE RECORDING MEDIUM RECORDING THE PROGRAM**

(71) Applicant: Appside Co., Ltd., Tokyo 116-0013 (JP)
(72) Inventor: TANIGUCHI, Nobumitsu, Tokyo 116-0013 (JP); TAKAGI, Shigeo, Tokyo 116-0013 (JP)
(74) Representative: TBK-Patent
(86) International application number: PCT/JP2008/000120
(87) International publication number: WO 2009/095955

(57) **Abstract**

Two input modes can be switched by a change of input to one input part. A portable telephone set 100 has an analog input part 152 provided with four capacitance-type analog sensors 20a to 20d arranged above, below, right and left on a substrate 10, five switches 30a to e arranged above, below, right and left and a center on the substrate 10 and a key top part 40 arranged above them. A processing mode of analog input from the analog sensor is switched by presence or absence of switch input.

## Description

### TECHNICAL FIELD

This invention relates to an analog input device, an analog input method, an analog input program, and a computer-readable recording medium for recording the program.

### BACKGROUND ART

Some of the conventional human input devices which are used in such portable devices as portable telephone sets, remote controllers, and PDA*'*s (personal digital assistant) are known to be provided with a rotational direction analog input means, a four-direction (upper, lower, left, and right)switch, or a five-direction (further including a central part)switch.

In these human input devices, a rotation input means and a switch are invariably utilized as independent phenomena. In the reproduction of music, for example, the rotation input means is utilized in a mode of scrolling a title menu and the switch in a mode of starting or stopping, and fast forwarding, and rewinding a piece of music.

The rotation input device is effective as in varying the scrolling amount but it limits the scrolling to a uniaxial direction. The four-direction switch which is capable of controlling the on-off status of the scrolling meets the problem of being incapable of varying the scrolling amount. In view of this situation, a touch-slide form sensor and a touch sensor-fitted screen which, with the input made in one input part, are enabled to control the scrolling in directions of 360 degrees and the scrolling amount have been developed. They, however, have the problem of being complicated in configuration and expensive.

### DISCLOSURE OF THE INVENTION

### PROBLEM TO BE SOLVED BY THE INVENTION

This invention has been produced in view of the foregoing problems encountered by the prior art and is aimed at providing an analog input device which is enabled by an input made to one input part to control the scrolling direction (360 degrees) and the scrolling amount and effect the switch input as well and which is simple in structure and inexpensive.

Another purpose of this invention is to provide an analog input device which, by varying the input made to one input part, is enabled to switch between two input modes.

### MEANS FOR SOLVING PROBLEM

The object of this invention mentioned above is attained by the following means.
(1) An analog input device which comprises:
   a key top part;
   an analog sensor part for detecting an input to said key top part and obtaining an analog input, and
   an input mode switching part for switching input modes by a change in the input to said key top part.
(2) An analog input device according to (1), wherein
   said analog sensor part outputs said analog input as a rectangular coordinate data.
(3) An analog input device according to (1) or (2), wherein
   said analog sensor part is a capacitance-type force sensor.
(4) An analog input device according to any of (1) - (3), wherein
   said input mode switching part switches input modes by the strength or weakness of the input to said key top part.
(5) An analog input device according to any of (1) - (4), wherein
   said analog input device further comprises an analog input level judging part for judging whether the analog input obtained by said analog sensor part exceeds a prescribed value or not and
   said input mode switching part switches input modes when the analog input is judged by said analog input level judging part to exceed the prescribed value.
(6) An analog input device according to any of (1) - (4), wherein
   said analog input device further comprises a switch part for detecting the input to said key top part and obtaining a switch input.
(7) An analog input device according to (6), wherein
   said input mode switching part switches input modes when a switch input is obtained by said switch part.
(8) An analog input device according to any of (1) - (7), wherein
   said analog input device is a portable telephone set, a PHS, a notebook personal computer, a portable game device, a PDA, an electronic pocketbook, a remote controller for an electronic device, a digital audio player, a camera, a digital camera, or a cam coder.
(9) An analog input device according to any of (1) - (8), wherein
   said analog input device is a peripheral device for use in a computer or a game device.
(10) An analog input method which comprises:
   an analog input obtaining step for detecting an input to a key top part and obtaining an analog input and
   an input mode switching step for switching input modes by a change in the input to said key top part.
(11) An analog input method according to (10), wherein
   said analog input obtaining step outputs said analog input as a rectangular coordinate data.
(12) An analog input method according to (10) or (11), wherein
   said analog input obtaining step obtains said analog input by a capacitance-type force sensor.
(13) An analog input method according to any of (10) - (12), wherein
   said analog input obtaining step switches input modes by the strength or weakness of the input to said key top part.
(14) An analog input method according to any of (10) - (13), wherein
   said analog input method further comprises an analog input level judging step for judging whether the analog input obtained by said analog input obtaining step exceeds a prescribed value or not and
   said input mode switching step switches input modes when the analog input is judged by said analog input level judging step to exceed the prescribed value.
(15) An analog input method according to any of (10) - (14), wherein
   said analog input method further comprises a switch input obtaining step for detecting an input to said key top part and obtaining a switch input.
(16) An analog input method according to (15), wherein
   said input mode switching step switches input modes when a switch input is obtained by said switch input obtaining step.
(17) An analog input program which causes:
   an analog input obtaining step for detecting an input to a key top part and obtaining an analog input and
   an input mode switching step for switching input modes by a change in the input to said key top part to be executed by an analog input device.
(18) An analog input program according to (17), wherein
   said analog input obtaining step outputs said analog input as a rectangular coordinate data.
(19) An analog input program according to (17) or (18), wherein
   said analog input obtaining step obtains said analog input by a capacitance-type force sensor.
(20) An analog input program according to any of (17) - (19), wherein
   said input mode switching step switches input modes by the strength or weakness of the input to said key top part.
(21) An analog input program according to any of (17) - (20), wherein
   said analog input program further causes an analog input level judging step for judging whether the analog input obtained by said analog input obtaining step exceeds a prescribed value or not to be executed by an analog input device and
   said input mode switching step switches input modes when the analog input is judged by said analog input level judging step to exceed the prescribed value.
(22) An analog input program according to any of (17) - (20), wherein
   said analog input program further causes a switch input obtaining step for detecting an input to said key top part and obtaining a switch input to be executed by an analog input device.
(23) An analog input program according to (22), wherein
   said input mode switching step switches input modes when a switch input is obtained by said switch input obtaining step.
(24) A computer readable recording medium which has recorded therein an analog input program set forth in any of (17) - (23).

### EFFECT OF THE INVENTION

According to this invention, an analog input device which is enabled by an input made to one input part to control the scrolling direction (360 degrees) and the scrolling amount and effect the input of switch as well and which is simple in structure and inexpensive can be provided.

Further, according to this invention, an analog input device which, by varying the input made to one input part, is enabled to switch between two input modes can be provided.

### MODE(S) FOR CARRYING OUT THE INVENTION

The modes of carrying out this invention will be described in detail below with reference to the drawings.

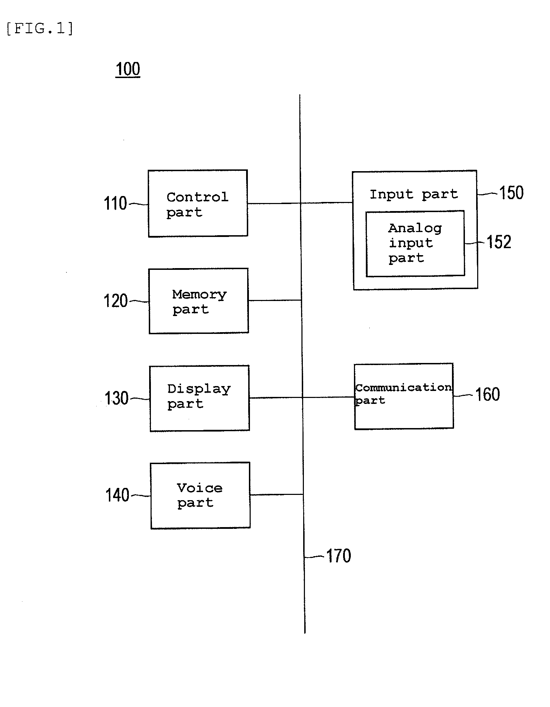

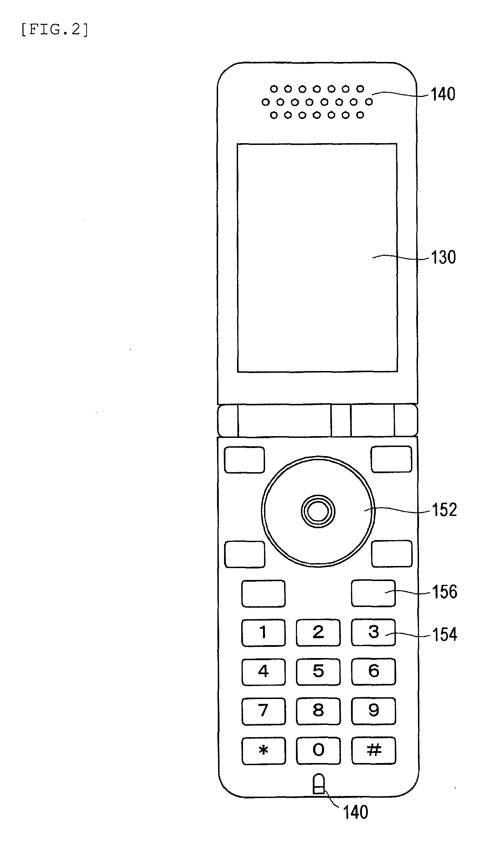

FIG. 1 is a block diagram illustrating the structure of a portable telephone set as an analog input device according to the first mode of embodiment of this invention and FIG. 2 is a schematic plan view illustrating the external appearance thereof. As shown in FIG. 1, a portable telephone set 100a according to the present mode of embodiment comprises a control part 110, a memory part 120, a display part 130, a voice part 140, an input part 150, and a communication part 160 and these component parts are mutually connected via a bus 170 which enables them to exchange signals with one another.

The control part 110 is a CPU and controls the component parts mentioned above and performs various arithmetic operations in accordance with a program. The memory part 120 comprises an ROM for storing various programs and parameters therein in advance, a RAM for having programs and data stored temporarily therein as a working area, and so forth. The display part 130 is a liquid crystal display and is used for the purpose of displaying various kinds of information. The voice part 140 is a speaker and microphone and is used for the purpose of inputting and outputting voices. The input part 150 is furnished, as illustrated in FIG. 2, with an analog input part 152, a ten key 154, various function keys 156 such as a selection key for selecting various functions, a power source key for turning on and off a power source, and so forth and is used for generating various kinds of input. The communication part 160, by a prescribed communication mode such as FDMA, TDMA, PDC, GSM, CDMA, or GPRS, is connected to a mobile communication network with a radio wave of a prescribed frequency band and enabled to perform mobile communication.

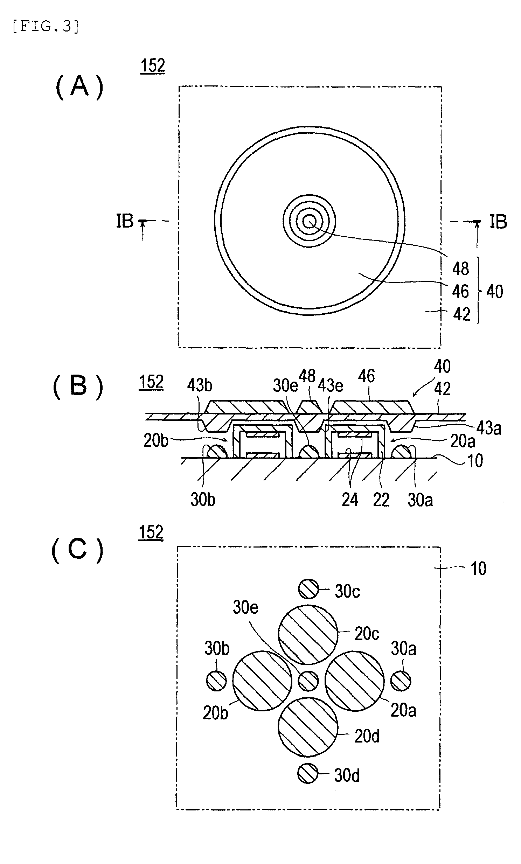

FIG. 3 is a drawing illustrating the structure of the analog input part 152 of the portable telephone set 100; (A) representing a plan view thereof, (B) representing a cross section taken along the line IB-IB of (A), and (C) representing a plan view of the state resulting from removing a key top part from (A).

The analog input part 152, as illustrated in FIG. 3, comprises a substrate 10, four analog sensors 20a, 20b, 20c, and 20d disposed on the upper, lower, left, and right parts of the upper surface of the substrate 10, five switches 30a, 30b, 30c, 30d, and 30e disposed on the upper, lower, left, right, and central parts similarly of the upper surface of the substrate 10, and a key top part 40 disposed in contact with the upper surfaces of the analog sensors 20a - 20d.

The analog sensors 20a - 20d are capacitance-type force sensors and individually comprise a cylindrical elastic part 22 and a pair of cylindrical electrodes 24 disposed opposite each other on the inner surface of the top cover of the elastic part 22 and the substrate 10. The elastic part 22 is formed of an elastic body of rubber or thermoplastic elastomer or a metal so that it may be deformed under an external force and allowed to restore its original shape when the external force is not applied to.

The switches 30a - 30e are individually formed of a small switch for use in electronic devices such as a rubber switch using a metal dome switch, a tact switch or an electroconductive silicone rubber, or an emboss seat switch.

The key top part 40 is composed of a key top base 42 made of silicone rubber sheet or like material, an annular peripheral key top 46 disposed on the key top base 42 and used for analog inputting, and a disciform center key top 48 used for depressing the center switch 30e. Convex parts 43a - 43d which counter the switches 30a - 30d are formed on the opposite face of the peripheral key top 46 of the key top base 42 and a convex part 43e which counters the center switch 30e is formed on the opposite face of the center key top 48. The key top base 42, in the part corresponding to a concave part 44, comes into contact with the upper faces of the analog sensors 20a - 20d.

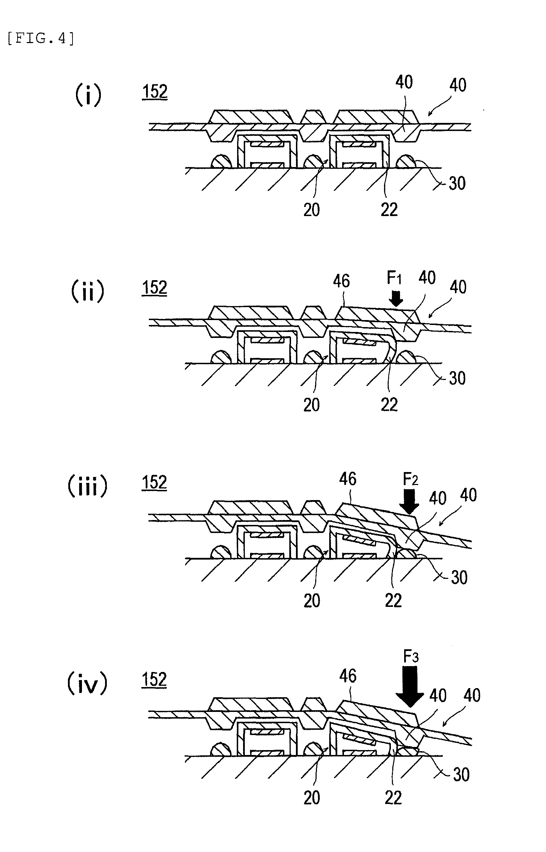

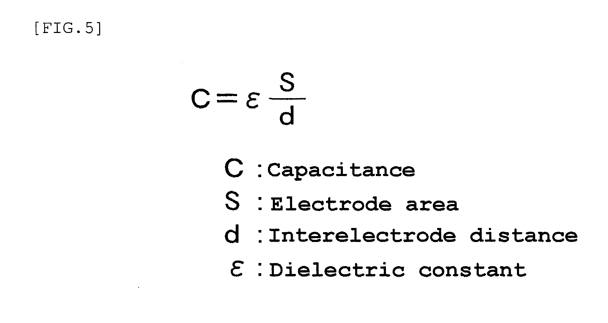

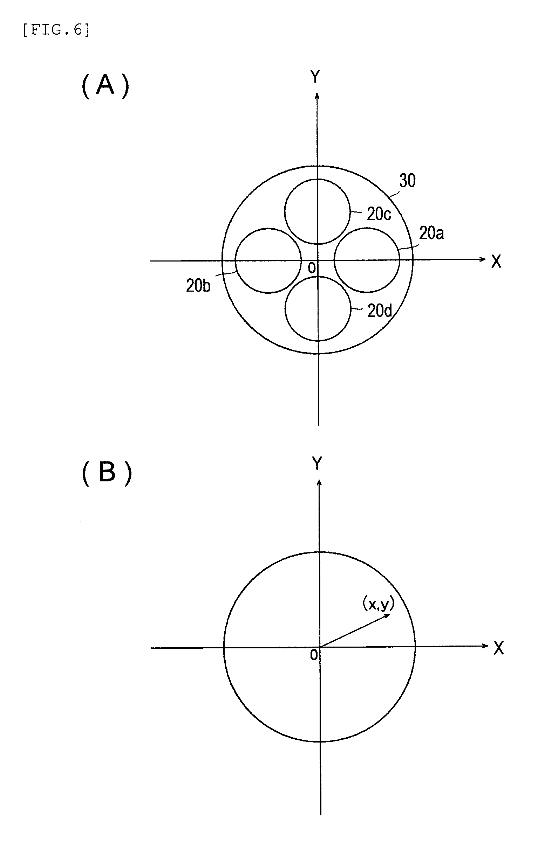

FIG. 4 is a drawing of the appearance in which the analog input part 152 shown in FIG. 3 (B) is deformed when a force is applied on the analog input part 152. In FIG. 4, the part (i) represents the state involving no input. In the part (ii), when a force F₁ (small input) is applied as by the user's fingertip on a part of the peripheral key top 46 of the key top part 40 of the analog input part 152, the elastic part 22 of the analog sensor 20 located near the part of the key top 40 applied to a force F is deformed to displace the key top part 40 downward and reduce the interelectrode distance d of the analog sensor 20 which has been deformed. Here, since the relation of the equation shown in FIG. 5 exists among the capacitance C, the electrode area S, and the interelectrode distance d of the analog sensor 20, the decrement of the interelectrode distance d, namely the magnitude of the force input into the analog sensor 20, can be found by detecting the increment of the capacitance C. Since the analog input part 152 is furnished with four analog sensors in the upper, lower, left, and right parts thereof, as shown in FIG. 6 (A), the rectangular coordinates which are assumed to have the center point O on the disciform plane of the key top part 30 of the information input part 152 as the origin of coordinates enable the analog sensor 20a to detect the positive component of the X axis, the analog sensor 20b the negative component of the X axis, the analog sensor 20c the positive component of the Y axis, and the analog sensor 20d the negative component of the Y axis respectively of the force F which is applied at an arbitrary position of the key top part 30. By determining variations in the capacitances of the four analog sensors 20a - 20d, therefore, the rectangular coordinate data (x, y) of the force F can be obtained as the analog input (FIG. 5 (B)).

In the part (ii), the switch 30 is in the OFF state because the convex part 43 of the key top part 40 is not in contact with the switch 30 or, even when it is in contact therewith, the contact has not caused the switch 30 to be sufficiently deformed. In the part (iii), when the key top part 40 is made to apply a larger force F₂ (>F₁), the convex part 43 of the key top part 40 depresses and deforms the switch 30 and turns on the switch 30. When, in the part (iv), the key top part 40 is made to apply a still larger force F₃ (> F₃), the switch is made to assume the ON state and the analog sensor 20 is further enabled to obtain an analog input.

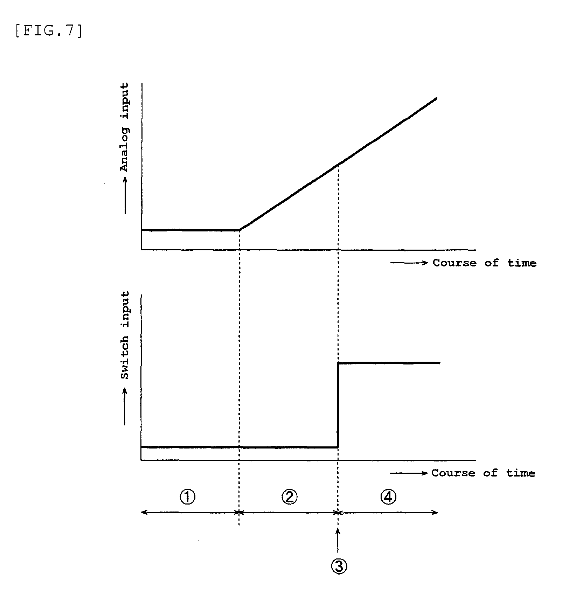

FIG. 7 is a graph showing the relation between the analog input and the switch input obtained by the analog input part 152 in the parts (i) - (iv) of FIG. 6; (i) representing the state in which both the analog input and the switch input are absent, (ii) the state in which the switch input is absent and the analog input alone is present, (iii) the state in which the switch is turned on, and (iv) the state in which both the analog input and the switch input are present.

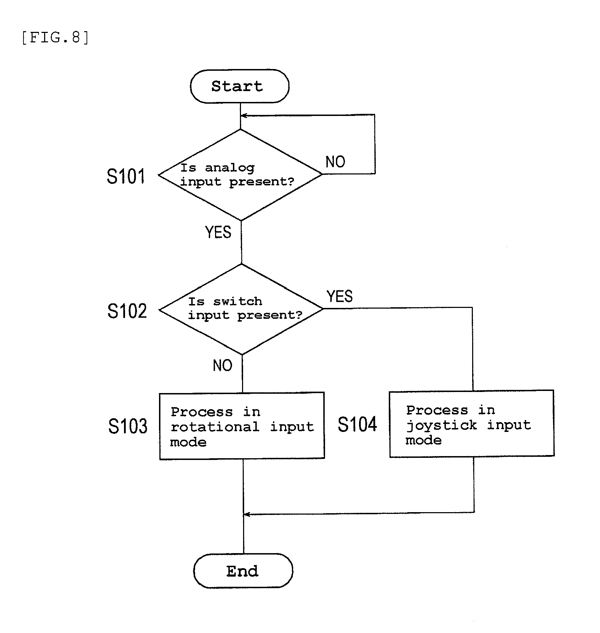

The operation of the portable telephone set 100 in the present mode of embodiment will be described below in outline. FIG. 8 is a flow chart showing the procedure of the process for controlling the analog input of the portable telephone set 100 in the present mode of embodiment. The algorithm represented by the flow chart of FIG. 8 is stored as a control program in the memory part 120 of the portable telephone set 100 and, with the start of the operation of the portable telephone set 100, is properly read out and executed by the control part 110.

At the step S101 of FIG. 8, the control part 110 first awaits the arrival of an analog input from the analog input part 152 (the choice NO at S101). As explained above with reference to FIG. 6 and FIG. 7, when the force is applied on the key top part 40 of the analog input part 152 by the user's fingertip, for example, the analog input part 152 outputs an analog input alone when the force is light or an analog input and a switch input both when the force is strong, to the control part 110.

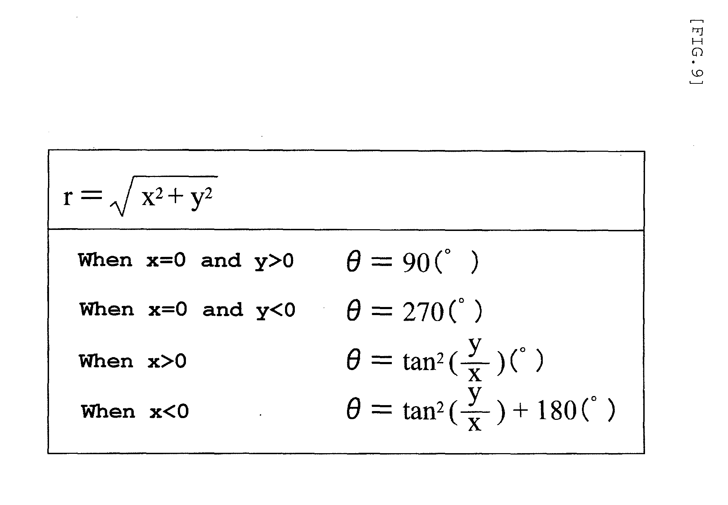

The control part 110, in the presence of an analog input from the analog input part 152 (the choice YES at S101), advances the process to the step S102 and determines the presence or absence of a switch input and, in the absence of the switch input (choice of NO at S102), advances the process to the step S103 and processes the analog input from the analog input part 152 in the rotational input mode. The term "rotational input mode" as used herein refers to an input mode that continuously changes the screen and such elements as menu, character, and numerical value by tracing the key top part (peripheral key top 46) of the analog input part 152 clockwise or anticlockwise. The direction of the change and the speed of the change can be controlled by the direction of rotation and the speed of rotation. To be specific, the rectangular coordinate data obtained as an analog input from the analog input part 152 is converted into a polar coordinate data in accordance with the conversion equation shown in FIG. 9 and the amount of change and the speed of change are determined based on the resultant r value (the magnitude of force) and the direction of change is determined based on the resultant θ value (the direction of force). The conversion to the θ value may be accomplished by storing a conversion table from X/Y value to θ in the memory part 120 and utilizing this table instead of relying on the aforementioned conversion equation.

At the step S102, in the presence of a switch input (the choice YES at S102), the process is advanced to the step S104 and the analog input from the analog input part 152 is processed in the joystick input mode. The term "joystick input mode" as used herein refers to a mode that moves a cursor or the like in an arbitrary direction (direction of 360 degrees) at an arbitrary speed so as to follow the input position of the key top part (peripheral key top 46) of the analog input part 152 or scrolls a displayed screen of a map, a still image, a web, or the like. To be specific, the cursor or the like is moved or the displayed screen is scrolled in accordance with the quantity which is proportional to the value obtained by amplifying with a prescribed value the amount of a change in the rectangular coordinate data obtained as an analog input from the analog input part 152 and further integrating the amplified amount for a prescribed period.

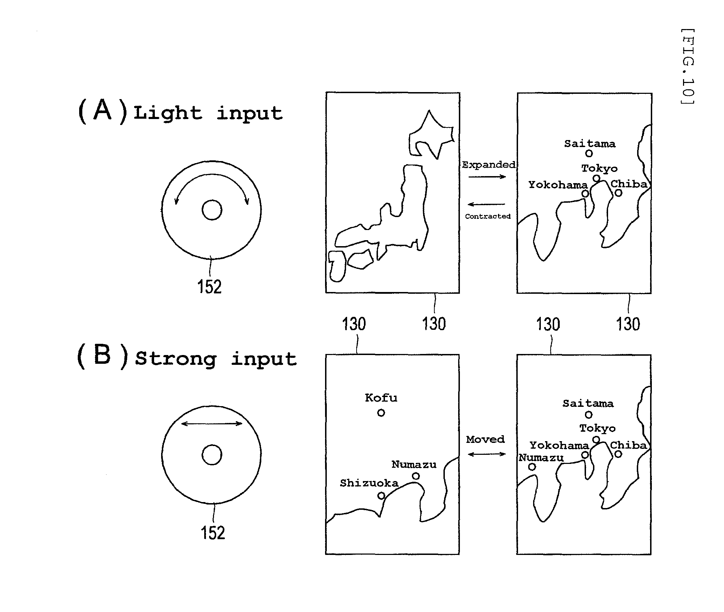

Next, the process for controlling the aforementioned analog input of the portable telephone set 100 will be explained below with reference to an example of the actual operation. FIG. 10 is a schematic drawing illustrating an example of applying the aforementioned process for controlling the analog input of the portable telephone set 100 to the operation of a map application; (A) representing the result of output on the display part 130 when the key top part of the analog input part 152 is actuated with light input and (B) representing the result of output when actuated with strong input. That is, when the analog input part 152 is actuated with light input as shown in FIG. 10 (A), the map is contracted anticlockwise or expanded clockwise because the input to the analog input part 152 is processed in a rotational input mode and the contraction scale ratio of the map is consequently varied. Meanwhile, when the analog input part 152 is actuated with strong input as shown in FIG. 10 (B), the input to the analog input part 152 is processed in the joystick input mode and the map is scrolled while following the input into the analog input part 152 and displayed in the display part 130. Consequently, the operation of expanding-contracting the map and the operation of scrolling the map can be freely carried out with a switch of the input mode by simply strengthening or weakening the input to the analog input part 152.

The portable telephone set 100 repeatedly carries out the procedure of the process for controlling the analog input shown in FIG. 8 unless an order to terminate the operation is issued particularly or a power source is cut off. When a switch input is made once at the step S102, the process may be so performed that the joystick input mode may be maintained and prevented from returning to the rotational input mode unless the state of absence of a switch input does not continue for a period exceeding a prescribed length. By adopting this procedure, the malfunction which comprises maintaining the operation of scrolling the map in the joystick input mode and inevitably altering the contraction of the map due to the switch to the rotational input mode can be prevented even when the operation of the map soft mentioned above erroneously uses a weak input while the map is being scrolled in the joystick input mode.

The foregoing mode of embodiment has been described with respect to an example of switching the rotational input mode and the joystick input mode by the strength and weakness of the input to the analog input part 152. This invention purports to enable the switch between a first input mode and a second input mode by the strength and weakness of the input to the analog input part 152, avoid limiting the kinds and the combination of input modes assigned for the switching to those involved in the foregoing example, and allow arbitrary input modes to be assigned for the switching. To cite another concrete example of the switching of input modes, in the operation of a web browser, for example, it is enabled, by assigning a rotational input mode to a light input and a joystick input mode to a strong input, to scroll a screen in the vertical direction with a light rotational input and scroll the screen in an arbitrary direction with a strong joystick input. Then, in the operation of application of the reproduction of moving image or music, for example, it is enabled, by assigning rotational input modes of different motions to a light input and a strong input, to effect the operation so as to control the increase or decrease of the amount of the sound being reproduced with a light rotational input and the strength or weakness of the quality of the sound being reproduced with a strong rotational input. Similarly, in the operation of application of the reproduction of moving image or music, it is enabled to effect the operation so as to control the scrolling of a title list with a light rotational input and select a title to be reproduced in the title list and start the reproduction of the selected title with a strong input.

Though the foregoing mode of embodiment switches input modes without discriminating the particular position of the analog input part 152 from which the switch input from the analog input part 152 has been emitted, this invention allows the input mode to be switched in relation to the switch input that is emitted from a switch located at a specific position of the analog input part 152. The operation of application of the reproduction of a moving image or a music, for example, may be manipulated to control the fluctuation of the volume of sound by a weak rotational input, control the speed of rapid traverse by strengthening or weakening the input which is generated by depressing the neighborhood of the right switch (switch 30a) of the analog input part 152, and control the speed of rewinding by strengthening or weakening the input which is generated by depressing the neighborhood of the left switch (switch 30b) of the analog input part 152. The operation of list scrolling as a menu screen or a music reproduction application may be manipulated to scroll the list in concert with the speed of rotation by a light input, control the speed of list scrolling in the upward direction by strengthening or weakening the input which is generated by depressing the neighborhood of the upper switch (switch 30c) of the analog input part 152, and control the speed of the list scrolling in the downward direction by strengthening or weakening the input which is generated by depressing the neighborhood of the lower switch (switch 30d) of the analog input part 152.

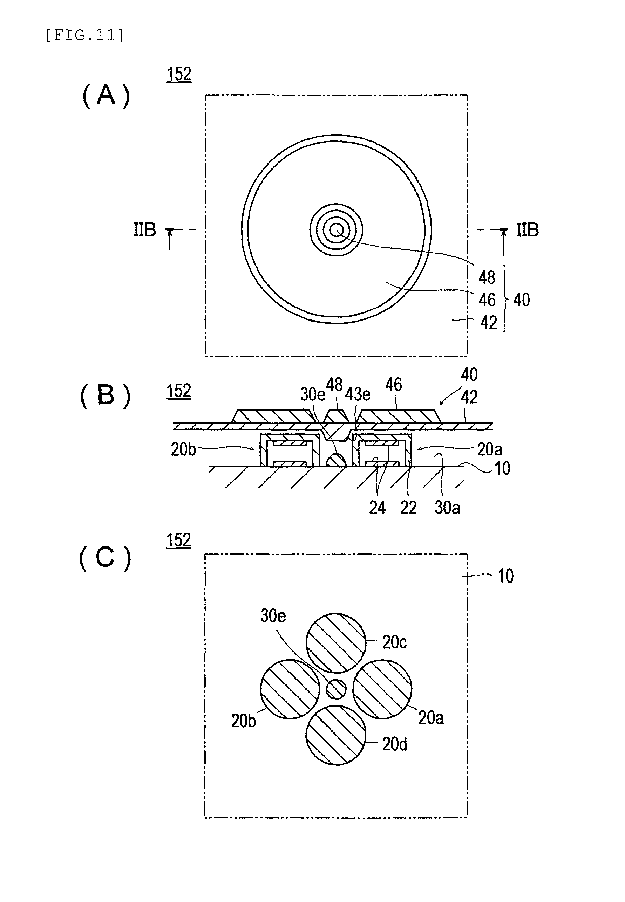

FIG. 11 is a drawing showing the structure of the analog input part 152 of the portable telephone set 100 according to the second mode of embodiment of this invention; (A) representing a plan view thereof, (B) representing a cross section taken along the line IIB-IIB of (A), and (C) representing a plan view resulting from removing a key top part from (A). As shown in FIG. 11, this analog input part 152 has the same structure as the analog input part illustrated in FIG. 3 excepting that it is not provided with the switches 30a - 30d.

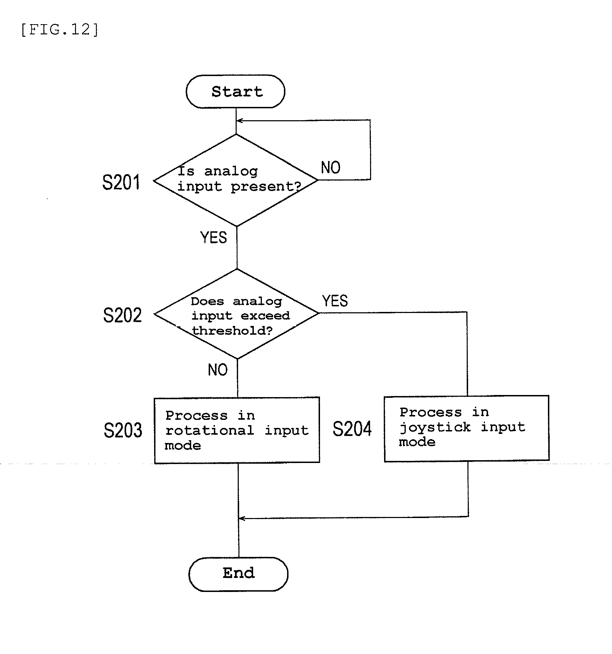

FIG. 12 is a flow chart showing the procedure of the process for controlling an analog input of a portable telephone set 100 in the present mode of embodiment. Incidentally, the algorithm shown by the flow chart of FIG. 8 is stored as a control program in a memory part 120 of the portable telephone set 100 and is properly read out by a control part 110 simultaneously with the start of the operation of the portable telephone set 100 and executed.

At the step S201 of FIG. 12, the control part 110 first awaits the arrival of an analog input from the analog input part 152 (the choice NO at S201). When the force is applied on the key top part 40 of the analog input part 152 as by the user's fingertip, the analog input part 152 outputs the applied analog input to the control part 110.

The control part 110, in the presence of an analog input from the analog input part 152 (the choice YES at S201), advances the process to the step S202, judges whether the analog input exceeds the threshold or not, and, when the analog input is less than the threshold (the choice NO at S202), advances the process to the step S203 and processes the analog input from the analog input part 152 in the rotational input mode. When the analog input at the step S202 is more than the threshold (the choice YES at S202), the control part 110 advances the process to the step S204 and processes the analog input from the analog input part 152 in the joystick input mode. The threshold which is set at the step S202 may be the value of X or the value of Y or the value of r. Also the analog input part which is not furnished with a switch but is formed solely of analog sensors can realize the switching of input modes by merely strengthening or weakening the input to the analog input part similarly to the portable telephone set 100 according to the aforementioned first mode of embodiment.

The analog input device of this invention is not limited to the aforementioned mode of embodiment but may be variously altered within the scope of allowing no deviation from the gist of this invention.

For example, while the aforementioned mode of embodiment has the analog sensors 20a - 20d of the analog input part 152 of the portable telephone set 100 individually formed in a cylindrical shape, this invention does not limit the analog sensors of the analog input device to this shape but allows them to be formed in a cylindrical shape with an oval, square, rectangular, sector, or circular plane. Similarly, the electrode 24 is not limited to the shape mentioned above but is allowed to be formed in the shape of a plate with an oval, square, rectangular, sector, or circular plane.

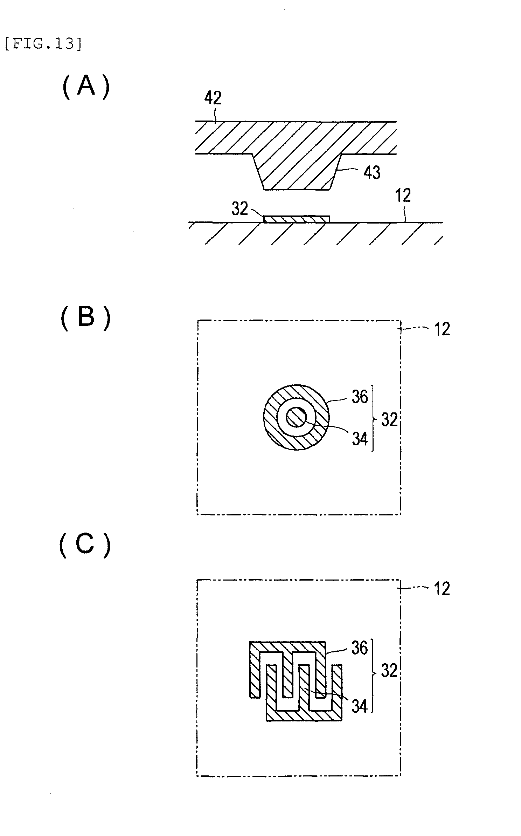

The foregoing mode of embodiment is described by citing an example wherein the switches 30a - 30e of the analog input part 152 of the portable telephone set 100 are individually formed of a metal dome switch or the like. As illustrated in FIG. 13, for example, a switch of the analog input part 152 may be formed of a switch pattern 32 consisting of a signal detecting switch pattern 34 and a grounding switch pattern 36 both laid on a print substrate 12 and the convex part 43 of the key top base 42 made of an electroconductive elastomer or the like.

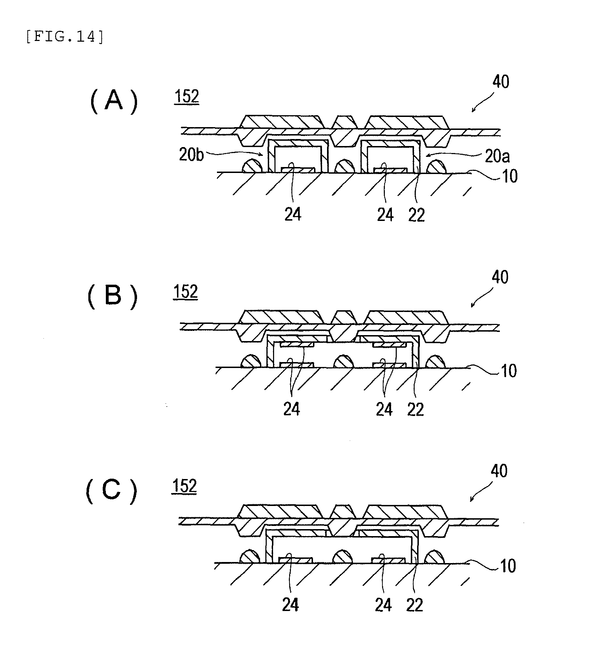

In the foregoing mode of embodiment, the analog sensors 20a - 20d of the analog input part 152 of the portable telephone set 100 are individually furnished with a pair of upper and lower electrodes. By using as the elastic part 22 what is obtained by printing or sputtering an electroconductive material on the surface of an electroconductive elastomer, a metal, or a nonconductive elastomer, the analog sensors 20a - 20d may be formed in a structure omitting an upper electrode as illustrated in FIG. 14 (A). The analog sensors 20a - 20d may be integrated and combined with one cylindrical elastic part 22 and four pairs of electrodes 24 disposed oppositely on the inner face part of an upper lid and the substrate 10 as illustrated in FIG. 14 (B). The elastic part 22 is allowed, by using an electroconductive elastomer therefor, to be formed in a structure omitting the upper electrodes as illustrated in FIG. 14(C).

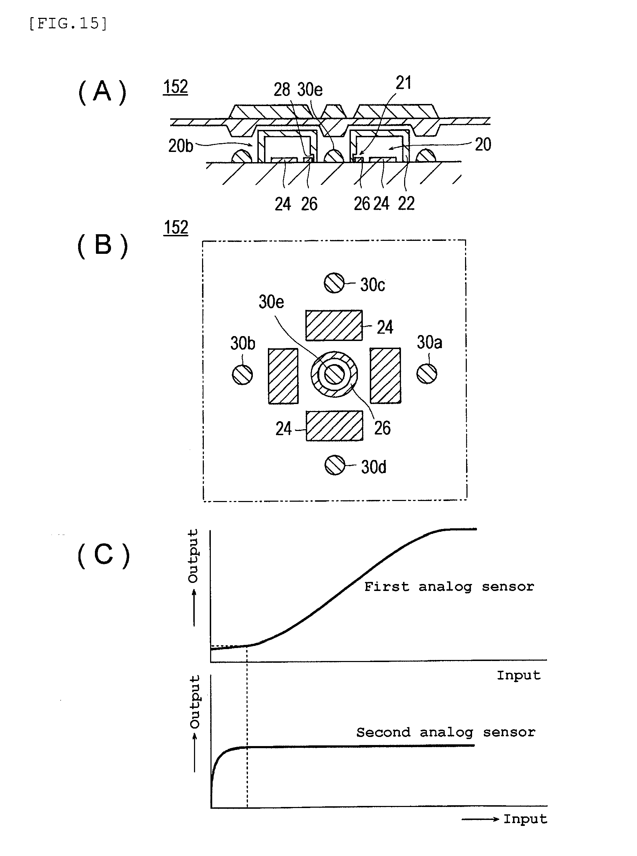

The analog input part of the analog input device according to this invention may be furnished with second analog sensors besides the analog sensors 20a - 20d that are involved in the aforementioned mode of embodiment. FIG. 15 is a drawing showing an example of the analog input part 152 having such a structure as just described; (A) representing a cross section thereof, (B) representing a plan view of the substrate thereof, and (C) representing a drawing showing the input-output relation of first analog sensors and second analog sensors. The analog input part 152 shown in FIG. 15 (A) and (B) is furnished with a first analog sensor 20 which is formed with four flat-plate electrodes 22a, 22b, 22c, and 22d disposed in the upper, lower, left, and right parts on the substrate 10 and the inner face of the upper lid of the elastic part 22 made of an electroconductive elastomer and a second analog sensor 21 which is formed with a toric electrode 26 disposed in the central part of the substrate 10 and the edge part of the convex part 28 of the elastic part 22. Since the thin convex part 28 readily deforms and the interelectrode distance is small owing to this structure, the second analog sensor 21 possesses an output characteristic which rises steeply and immediately shifts to a saturated state as shown in FIG. 15 (C). By utilizing the second analog sensor 21 for detecting the zero point information of the first analog sensor 22, therefore, the accuracy of the first analog sensor can be heightened and the analog sensor of high reliability can be constructed.

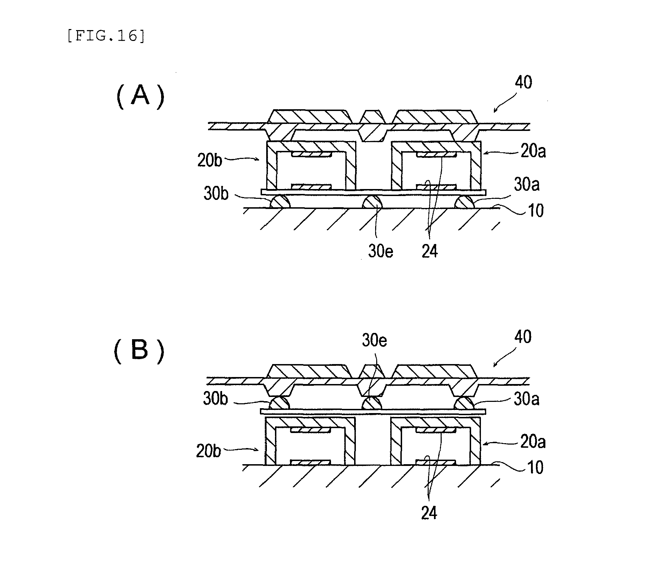

Though the aforementioned mode of embodiment has the analog input part 152 of the portable telephone set 100 so constructed that the analog sensor 20 and the switch 30 are disposed on one and the same plane (on the substrate 10), this invention does not limit the analog input part of the analog input device to this structure. The structure may be such that the switch 30 is disposed on the substrate and the analog sensor 20 is further superposed thereon as illustrated in FIG. 16 (A) or conversely that the analog sensor 20 is disposed on the substrate and the switch is further superposed thereon as illustrated in FIG. 16 (B).

Though the analog input device of this invention is described, in the aforementioned mode of embodiment, by adducing a portable telephone set as an example, this invention is not limited thereto but can be applied to any apparatus that is furnished with an analog input part (human input device). As other examples of the analog input device of this invention, PHS, notebook personal computers, portable game devices, PDA, portable computers such as electronic pocketbooks, remote controllers for various electronic devices, digital audio players, digital cameras, and household electric devices such as cam coders may be cited. The analog input device of this invention may be constructed as a peripheral device for a personal computer or a game device and particularly as a substitutive input device for a mouse, a keyboard, a joystick, or the like.

The analog input device and the analog input method according to this invention can be realized either with a hardware circuit used exclusively for executing the relevant procedure described above or by executing the program describing the procedure with a CPU. When this invention is realized by the latter means, the aforementioned program for operating a data input device may be provided by a computer-readable recording medium such as a floppy (registered trademark) disk, a CD-ROM, or the like or may be provided on line via a network such as an internet or the like. In this case, the program which is recorded in the computer-readable recording medium is usually transferred to the ROM, hard disk, or the like and stored therein. This programmaybe offered as a sole application software or offered as a driver for exclusive use and consequently incorporated in the basic software of a data input device to serve as one function of the device.

### INDUSTRIAL APPLICABILITY

According to this invention, an analog input device which is capable of switching two input modes by a change in an output to one input part can be offered with a simple structure at a low cost.

### BRIEF DESCRIPTION OF THE DRAWINGS

[FIG. 1] This a block diagram illustrating the structure of a portable telephone set as an analog input device according to the first mode of embodiment of this invention.
[FIG. 2] This is a schematic plan view illustrating the external appearance of a portable telephone set 100.
[FIG. 3] This is a drawing illustrating the structure of an analog input part 152 of the portable telephone set 100; (A) representing a plan view thereof, (B) representing a cross section taken along the line IB-IB in (A), and (C) representing a plan view illustrating the state that results from removing a key top part from (A).
[FIG. 4] This is a drawing illustrating a situation in which the analog input part 152 is deformed when a force is applied to the analog input part 152 in FIG. 3 (B).
[FIG. 5] This is an equation representing the relations among the capacitance C, the electrode area S, and the interelectrode distance d of an analog sensor 20.
[FIG. 6] This is a drawing which illustrates rectangular coordinates having as the origin of coordinates the center point O on the disciform plane of a key top part 30 of an data input part 152.
[FIG. 7] This is a graph representing the relation between analog inputs and switch inputs that are obtained by the analog input part 152 at (i) - (iv) in FIG. 4.
[FIG. 8] This is a flow chart representing the procedure of the process for controlling an analog input to a portable telephone set 100 in the aforementioned mode of embodiment.
[FIG. 9] This is a conversion equation to be used in converting the rectangular coordinates data obtained as an analog input from the analog input part 152 into polar coordinates.
[FIG. 10] This is a conceptual scheme which shows an example of applying the aforementioned process for controlling the analog input of the portable telephone set 100 to the operation of a map application; (A) representing the result of generating an output on a display part 130 when the key top part of the analog input part 152 is actuated with a light input and (B) representing the result of generating an output when the key top part is actuated with a strong input.
[FIG. 11] This is a drawing which shows the structure of an analog input part 152 of the portable telephone set 100 according to the second mode of embodiment of this invention; (A) representing a plan view thereof, (B) representing a cross section taken along the line IIB-IIB of (A), and (C) representing a plan view of the situation which results from removing the key top part from (A).
[FIG. 12] This is a flow chart showing the procedure of the process for controlling an analog input of the portable telephone set 100 in the aforementioned mode of embodiment.
[FIG. 13] This is a drawing which shows another example of the structure of the switch 30 of the analog input part 152 of the portable telephone set 100; (A) representing a cross section thereof and (B) representing a plan view of the substrate thereof.
[FIG. 14] This is a cross section which shows another example of the structure of the analog input part 152 of the portable telephone set 100.
[FIG. 15] This is a drawing which shows another example of the structure of the analog input part 152 of the portable telephone set 100; (A) representing a cross section thereof, (B) representing a plan view of the substrate thereof, and (C) representing a graph showing an input-output relation between a first analog sensor and a second analog sensor
[FIG. 16] This is a cross section showing another example of the structure of the analog input part 152 of the portable telephone set 100.

### EXPLANATION OF LETTERS OR NUMERALS

10 A substrate
20, 20a, 20b, 20c and 20d An analog sensor
22 An elastic part
24 and 26 An electrode
30, 30a, 30b, 30c, 30d and 30e A switch
32 A switch pattern
34 A signal detecting switch pattern
36 A grounding switch pattern
40 A key top part
42 A key top base
43, 43a, 43b, 43c, 43d and 43e A convex part
46 An annular peripheral key top
48 A center key top
100 A portable telephone set
110 A control part
120 A memory part
130 A display part
140 A voice part
150 An input part
152 An analog input part
154 A ten key
156 Various function keys
160 A communication part
170 A bus

## Claims

1. An analog input device which comprises:
a key top part;
an analog sensor part for detecting an input to said key top part and obtaining an analog input, and
an input mode switching part for switching input modes by a change in the input to said key top part.

2. An analog input device according to Claim 1, wherein
said analog sensor part outputs said analog input as a rectangular coordinate data.

3. An analog input device according to Claim 1 or Claim 2, wherein
said analog sensor part is a capacitance-type force sensor.

4. An analog input device according to any of Claim 1 - Claim 3, wherein
said input mode switching part switches input modes by the strength or weakness of the input to said key top part.

5. An analog input device according to any of Claim 1 - Claim 4, wherein
said analog input device further comprises an analog input level judging part for judging whether the analog input obtained by said analog sensor part exceeds a prescribed value or not and
said input mode switching part switches input modes when the analog input is judged by said analog input level judging part to exceed the prescribed value.

6. An analog input device according to any of Claim 1 - Claim 4, wherein
said analog input device further comprises a switch part for detecting the input to said key top part and obtaining a switch input.

7. An analog input device according to Claim 6, wherein
said input mode switching part switches input modes when a switch input is obtained by said switch part.

8. An analog input device according to any of Claim 1 - Claim 7, wherein
said analog input device is a portable telephone set, a PHS, a notebook personal computer, a portable game device, a PDA, an electronic pocketbook, a remote controller for an electronic device, a digital audio player, a camera, a digital camera, or a cam coder.

9. An analog input device according to any of Claim 1 - Claim 8, wherein
said analog input device is a peripheral device for use in a computer or a game device.

10. An analog input method which comprises:
an analog input obtaining step for detecting an input to a key top part and obtaining an analog input and
an input mode switching step for switching input modes by a change in the input to said key top part.

11. An analog input method according to Claim 10, wherein
said analog input obtaining step outputs said analog input as a rectangular coordinate data.

12. An analog input method according to Claim 10 or Claim 11, wherein
said analog input obtaining step obtains said analog input by a capacitance-type force sensor.

13. An analog input method according to any of Claim 10 - Claim 12, wherein
said analog input obtaining step switches input modes by the strength or weakness of the input to said key top part.

14. An analog input method according to any of Claim 10 - Claim 13, wherein
said analog input method further comprises an analog input level judging step for judging whether the analog input obtained by said analog input obtaining step exceeds a prescribed value or not and
said input mode switching step switches input modes when the analog input is judged by said analog input level judging step to exceed the prescribed value.

15. An analog input method according to any of Claim 10 - Claim 14, wherein
said analog input method further comprises a switch input obtaining step for detecting an input to said key top part and obtaining a switch input.

16. An analog input method according to Claim 15, wherein
said input mode switching step switches input modes when a switch input is obtained by said switch input obtaining step.

17. An analog input program which causes:
an analog input obtaining step for detecting an input to a key top part and obtaining an analog input and
an input mode switching step for switching input modes by a change in the input to said key top part to be executed by an analog input device.

18. An analog input program according to Claim 17, wherein
said analog input obtaining step outputs said analog input as a rectangular coordinate data.

19. An analog input program according to Claim 17 or Claim 18, wherein
said analog input obtaining step obtains said analog input by a capacitance-type force sensor.

20. An analog input program according to any of Claim 17 - Claim 19, wherein
said input mode switching step switches input modes by the strength or weakness of the input to said key top part.

21. An analog input program according to any of Claim 17 - Claim 20, wherein
said analog input program further causes an analog input level judging step for judging whether the analog input obtained by said analog input obtaining step exceeds a prescribed value or not to be executed by an analog input device and
said input mode switching step switches input modes when the analog input is judged by said analog input level judging step to exceed the prescribed value.

22. An analog input program according to any of Claim 17 - Claim 20, wherein
said analog input program further causes a switch input obtaining step for detecting an input to said key top part and obtaining a switch input to be executed by an analog input device.

23. An analog input program according to Claim 22, wherein
said input mode switching step switches input modes when a switch input is obtained by said switch input obtaining step.

24. A computer readable recording medium which has recorded therein an analog input program set forth in any of Claim 17 - Claim 23.
